# EUROPÄISCHE PATENTSCHRIFT

(11) **EP 1 350 045 B1**
(45) Veröffentlichungstag und Bekanntmachung des Hinweises auf die Patenterteilung: **19.11.2008**
(21) Anmeldenummer: 01995561.6
(22) Anmeldetag: 29.11.2001
(51) Int. Cl.: F16J 1/09, F02F 3/22

(54) **VERFAHREN ZUR HERSTELLUNG EINES RINGTRÄGERS MIT ANGESCHWEISSTEM BLECHKÜHLKANAL**
METHOD FOR PRODUCING A RING SUPPORT WITH A SHEET METAL COOLING CHANNEL WELDED THEREON
PROCEDE POUR PRODUIRE UN PORTE-SEGMENT COMPORTANT UN CANAL DE REFROIDISSEMENT EN TOLE SOUDE

(30) Priorität: 11.01.2001 DE 10100955
(43) Veröffentlichungstag der Anmeldung: 08.10.2003
(73) Patentinhaber: MAHLE GMBH, D-70376 Stuttgart (DE)
(72) Erfinder: ULLRICH, Michael, 71696 Möglingen (DE)
(74) Vertreter: Pohle, Reinhard
(86) Internationale Anmeldenummer: PCT/DE2001/004528
(87) Internationale Veröffentlichungsnummer: WO 2002/055912

(56) Entgegenhaltungen:
- DE-A- 4 438 703
- DE-B- 1 097 210
- US-A- 4 120 081
- US-A- 4 907 545

## Beschreibung

Die Erfindung betrifft ein Verfahren zur Herstellung eines Ringträgers mit angeschweißtem Blechkühlkanal nach dem Oberbegriff des Anspruchs 1.

Derartige Ringträger sind bekannt beispielsweise aus der DE 19750021 A, der US 4,907,545, der JP 5-240347 oder der DE 7212560 U. Dabei werden die Ringträger mit Blechkühlkanal in geschlossenem Zustand eingegossen und es werden Öffnungen für die Zufuhr von Kühlöl erst nach der Herstellung des Kolbens gebohrt. Da das Material des Blechkühlkanals im Regelfall aus austenitischem Stahl besteht, erweist sich das Anbohren und das Entgraten des Kühlkanals als schwierig.

Die Erfindung beschäftigt sich daher mit dem Problem, bei gattungsgemäßen Verfahren eine einfache Methode zur Herstellung der Öffnungen im Kühlkanal zu finden.

Dieses Problem wird gelöst durch das kennzeichnende Merkmal des Anspruchs 1. Vorteilhafte Weiterbildungen sind Gegenstand der Unteransprüche.

Die Herstellung der Öffnungen vor dem Umgießen des Kühlkanalringträgers erweist sich als deutlich einfacher. Die bei der Alfinvorbehandlung in den Blechkühlkanal eindringende Schmelze erweist sich als nicht nachteilig, da sie nach der Entnahme des Kühlkanalringträgers aus dem Alfinbad weitgehend auslaufen kann.

Bei der Herstellung des Kolbens in der Kokille wird der Kühlkanalringträger vorteilhaft von Pinolen gehalten, die gleichzeitig die Öffnungen des Blechkühlkanals verschließen.

Die Erfindung wird im folgenden anhand einer Zeichnung näher erläutert. Es zeigt:

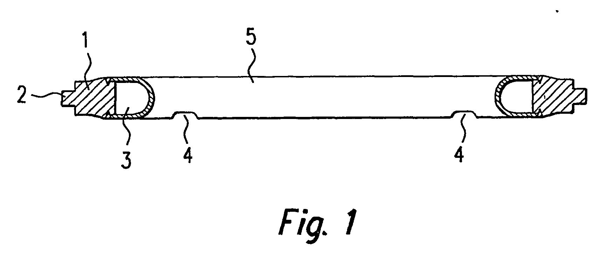

- Fig. 1: einen erfindungsgemäßen Ringträger mit Blechkühlkanal und Öffnungen, die vor dem Umgießen hergestellt sind (Querschnitt).

Der Ringträger 1 weist einen äußeren Haltering 2 und eine Innenseite 3 auf, die gemeinsam mit dem Blechring bzw. Blechkühlkanal 5 einen geschlossenen Kühlkanal eines Kolbens für Verbrennungsmotoren bildet. Ringträger 1 und Blechring 5 sind miteinander verschweißt.

In den Blechring 5 sind Öffnungen 4 eingebracht, mit denen der Kühlkanalringträger später auf die Pinolen einer Kokille gesteckt wird. Dabei sind die Pinolen innenbelüftet und es ist der Durchmesser der Pinolen so auf die Öffnungen 4 abgestimmt, daß ein Eindringen der Schmelze in den Blechkühlkanal beim Umgießen des Kolbens weitgehend verhindert wird.

## Patentansprüche

1. Verfahren zur Herstellung eines Ringträgers (1) mit angeschweißtem Blechkühlkanal (5), wobei der Blechkühlkanal (5) Öffnungen (4) zur Zufuhr und Abfuhr von Kühlöl aufweist und wobei der Ringträger (1) mit angeschweißtem Kühlkanal (5) nach seiner Herstellung in einem Tauchbad alfiniert wird und anschließend in einer Kokille mit Schmelze umgossen wird, um einen Kolben herzustellen, wobei
die Öffnungen (4) des Blechkühlkanals (5) vor dem Umgießen hergestellt werden, **dadurch gekennzeichnet**
**dass** der Blechkühlkanals (5) bei der Alfin-Vorbehandlung mit Schmelze befüllt wird, die nach der Entnahme aus dem Alfinbad auslaufen kann.

2. Verfahren nach Anspruch 1,
**dadurch gekennzeichnet,**
**dass** die Öffnungen (4) vordem Biegen des Blechkühlkanals (5) aus einem ebenen Blech oder aus dem angeschweißten Blechkühlkanal (5) gestanzt oder mechanisch bearbeitet werden.

## Claims

1. Method for producing a ring support (1) with a sheet metal cooling channel (5) welded thereon, whereby the sheet metal cooling channel (5) comprises openings (4) for supplying and removing cooling oil, and whereby the ring support (1) with the cooling channel (5) welded thereon is alfinized after its production in an immersion bath, and subsequently cast around with melt in an iron mould to produce a piston, whereby the openings (4) of the sheet metal cooling channel (5) are produced prior to the casting around, **characterised in that** the sheet metal cooling channel (5) is filled with melt during the alfin pretreatment, which after removal can run out of the alfin bath.

2. Method according to claim 1, **characterised in that** the openings (4) before bending the sheet metal cooling channel (5) are punched or mechanically worked out of a plane metal sheet or the welded-on sheet metal cooling channel (5).

## Revendications

1. Procédé de fabrication d'un porte-segment (1) comprenant un canal de refroidissement en tôle (5) soudé, procédé dans lequel le canal de refroidissement en tôle (5) comporte des ouvertures (4) pour l'arrivée et l'évacuation d'huile de refroidissement, et dans lequel le porte-segment (1), avec le canal de refroidissement (5) soudé, est alfiné après sa fabrication dans un bain d'immersion, puis est coulé dans une coquille avec de la masse fondue, pour fabriquer un piston, les ouvertures (4) du canal de refroidissement en tôle (5) étant réalisées avant la coulée, **caractérisé en ce que** le canal de refroidissement en tôle (5) est rempli de masse fondue lors du traitement préalable d'alfination, laquelle masse fondue peut s'écouler après le retrait du bain d'alfination.

2. Procédé suivant la revendication 1, **caractérisé en ce que** les ouvertures (4) sont découpées, avant le pliage du canal de refroidissement en tôle (5), d'une tôle plane ou du canal de refroidissement en tôle (5) soudé ou sont usinées mécaniquement.
